## Europäisches Patentamt
## European Patent Office
## Office européen des brevets

(19)

(11) Numéro de publication: **0 270 406**
**A1**

---

## (12) DEMANDE DE BREVET EUROPEEN

(21) Numéro de dépôt: **87402449.0**

(22) Date de dépôt: **30.10.87**

(51) Int. Cl.⁴: **B 60 G 21/04**

---

(30) Priorité: **07.11.86 FR 8615549**

(43) Date de publication de la demande:
**08.06.88 Bulletin 88/23**

(84) Etats contractants désignés:
**BE DE ES GB IT SE**

(71) Demandeur: **REGIE NATIONALE DES USINES RENAULT**
**Boîte postale 103 8-10 avenue Emile Zola**
**F-92109 Boulogne-Billancourt (FR)**

(72) Inventeur: **Fouiquier, Jacques**
**1, Rue des Tremblaux**
**F-78500 Sartrouville (FR)**

**Thoraval, Richard**
**54, Rue de Chatou**
**F-95240 Cormeilles en Parisis (FR)**

(74) Mandataire: **Réal, Jacques et al**
**8 & 10, avenue Emile Zola**
**F-92109 Boulogne-Billancourt (FR)**

---

(54) **Structure de train pour suspension à roues indépendantes.**

㊗ Structure de train pour suspensions à roues indépendantes, notamment du type Mac PHERSON et pour l'avant d'un
véhicule automobile. Les bras de roue (4) sont pourvus
d'ouvertures (13) permettant le passage des extrémités de la
barre de torsion (11) située en dessous du plan des bras (4),
lesdites extrémités étant raccordées à la partie supérieure
d'une biellette (16) verticale, dirigée vers le haut et pourvue de
rotules à ses deux bouts, dont la partie inférieure est solidarisée
à la face supérieure des bras (4).
- Application aux suspensions.

FIG.1

**EP 0 270 406 A1**

**Description**

## STRUCTURE DE TRAIN POUR SUSPENSIONS A ROUES INDEPENDANTES

La présente invention se rapporte à une structure de train pour suspensions à roues indépendantes, plus particulièrement du type Mac PHERSON et pour l'avant d'un véhicule automobile.

On connait la densité de remplissage de l'espace disponible entre les passages de roue, la partie supérieure des bras et la face inférieure de la caisse, occupé notamment par la biellette de direction et son soufflet, ainsi la transmission et le sien.

Cet espace est d'autant plus petit que, pour les véhicules haut de gamme à grand empattement, les braquages de roues avant sont importants afin de conserver les rayons de braquage acceptables et que les roues de ce type de véhicule nécessitent un grand volume pour leurs forts débattements.

Par ailleurs, on sait que le rattachement des extrémités de la barre anti-dévers aux bras de roue ou aux jambes de force s'effectue dans de meilleures conditions au moyen de biellettes rotulantes à leurs extrémités, qu'au moyen d'un palier en caoutchouc, dont l'axe généralement transversal à celui du véhicule, s'accommode mal des oscillations d'un bras de roue transversal, autour d'un axe longitudinal au véhicule.

Pour des problèmes de garde au sol, la position de la biellette ci-dessus est imposée à la face supérieure des bras de roue, son volume de fonctionnement ainsi que celui de la barre anti-dévers s'ajoutant ainsi à celui des organes évoqués précédemment.

Pour résoudre ce problème, on rejette la barre anti-dévers en avant ou en arrière de ces organes, la liaison de ses extrémités avec les bras de roue respectifs étant assurée par des prolongements obliques d'une longueur suffisantes ; un inconvénient important de cette disposition résulte du fait que ces prolongements déterminent les bras de leviers qui induisent une possibilité de torsion de la barre sur elle-même, diminuant ainsi son rendement de transmission du mouvement vertical d'une roue à l'autre.

On peut diminuer cet effet nuisible en augmentant la raideur de la barre en même temps que son diamètre et donc de son poids, on pénalise de ce fait la légèreté recherchée pour le véhicule ainsi que son silence.

La présente invention a pour but de pallier les difficultés ci-dessus, en permettant le positionnement d'une barre anti-dévers plus près de l'axe des roues, en diminuant par conséquent la longueur des prolongements d'attache aux bras de roue et les inconvénients qui en découlent, tout en évitant les problèmes d'encombrement évoqués.

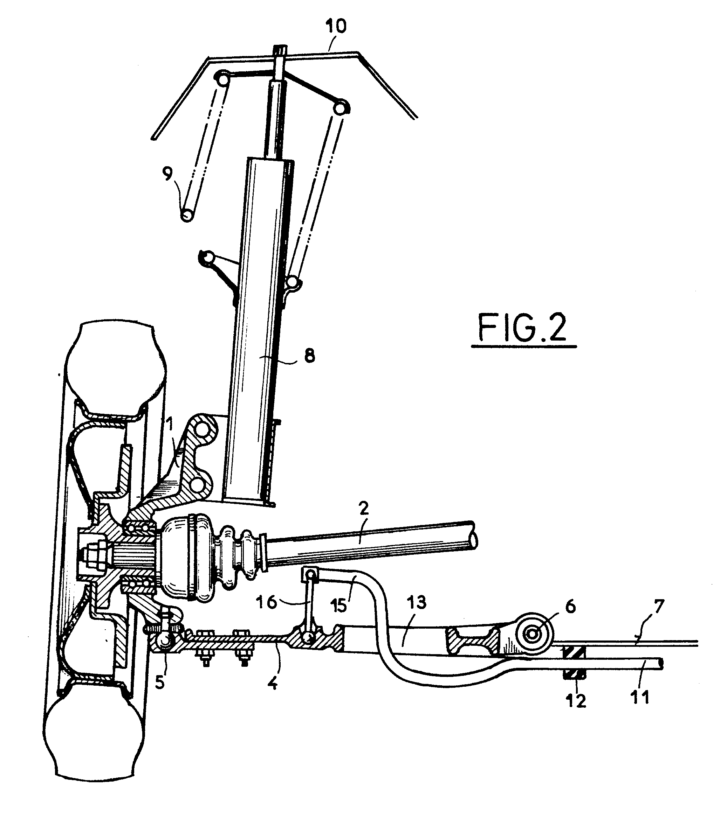

L'invention sera décrite, à titre d'exemple non limitatif, au regard des figures 1 à 3 ci-jointes, qui se rapportent respectivement :

 - la figure 1, à une vue en perspective d'un train de roue selon l'invention,
 - la figure 2, à une vue en coupe transversale du train précédent,
 - la figure 3, à une vue en perspective d'une variante de l'invention.

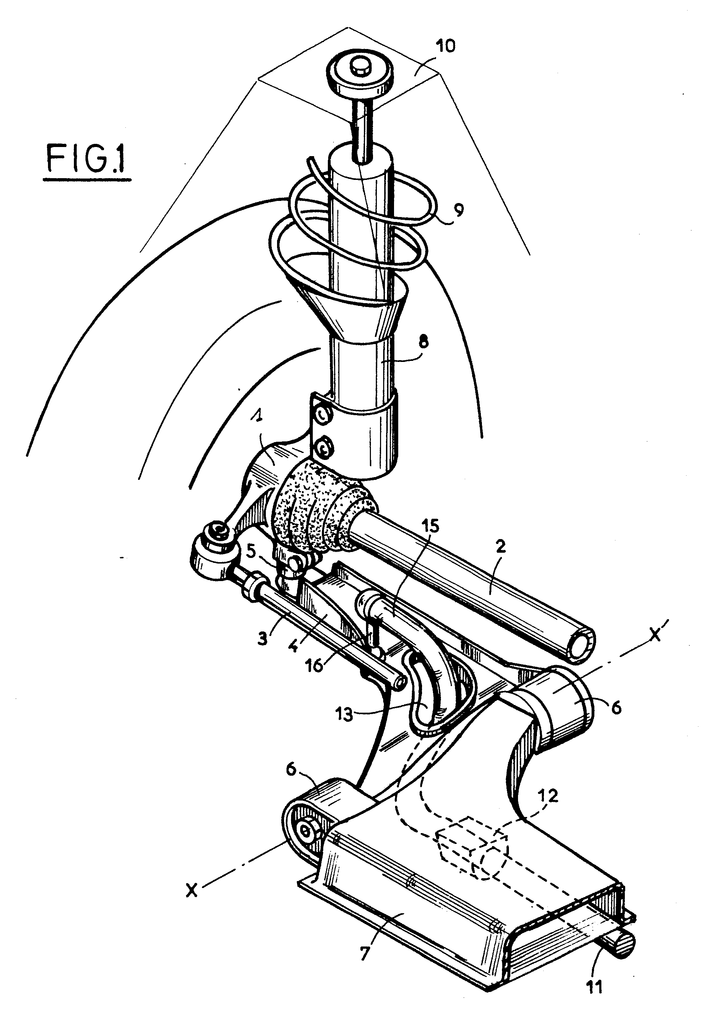

En référence à la figure 1, on voit que la structure du train selon l'invention est du type Mac PHERSON ; au porte-fusée 1 sont reliés respectivement la transmission 2, la biellette de direction 3, le bras de roue transversal 4 qui lui est fixé par une rotule 5 et qui se trouve solidarisé par des articulations 6, mobiles autour d'un axe X'X parallèle à l'axe longitudinal du véhicule, à un berceau 7 sur lequel est préassemblé le groupe motopropulseur, en vue d'un montage global sur la caisse du véhicule automobile.

Une jambe de force 8 prend appui par sa base sur le porte-fusée, tandis que sa partie supérieure pourvue de façon connue en soi d'un ressort hélicoïdal 9 est solidarisée à la caisse 10.

Conformément à l'invention, une barre anti-dévers 11 est disposée sous le berceau 7, auquel elle est fixée par des attaches élastiques 12. Au niveau des bras de roue 4 pourvus d'ouvertures 13, elle remonte et ses extrémités 15 sont fixées à la partie supérieure d'une biellette 16 pourvue de rotules à ses deux bouts, dont la partie inférieure est solidarisée à la face supérieure des bras 4.

On voit que le passage de la barre 11 à travers les bras 4 permet de s'échapper très rapidement à l'environnement très contraignant régnant au-dessus des bras 4, pour filer sous le berceau 7.

De ce qui précède, il résulte qu'il n'est plus nécessaire de s'éloigner beaucoup de l'axe des roues et qu'en conséquence l'efficacité de la barre anti-dévers est augmentée, par diminution de la longueur des bras de leviers situés à ses extrémités. La raideur de la barre 11 étant structurellement plus grande que dans les dispositions selon l'état de la technique antérieure, on peut de façon conséquente en diminuer son diamètre, son poids et son coût ; par ailleurs, on améliore simultanément le confort acoustique du dispositif.

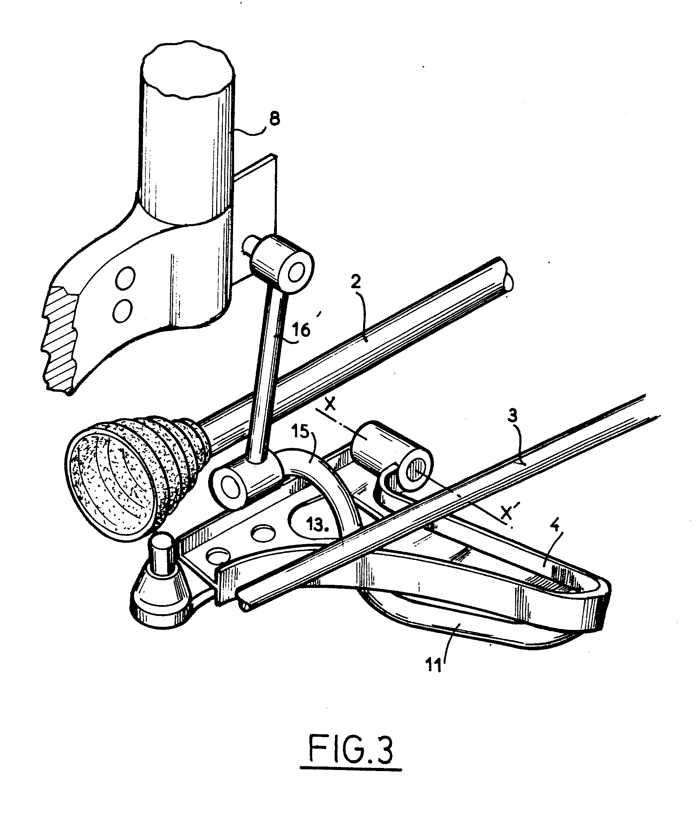

Selon la variante de la figure 3, toutes choses étant égales par ailleurs, on voit que l'extrémité de la barre de torsion 11 est solidarisée non plus au bras de roue 4 mais à la partie inférieure de la jambe de force 8 par l'intermédiaire d'une biellette 16' verticale et dirigée vers le haut. Comme dans la représentation précédente, on constate que la barre 11 n'ajoute pas à l'encombrement de la zone supérieure aux bras de roue 4 et qu'elle n'est pas non plus rejetée loin en avant ou en arrière de l'axe des roues.

**Revendications**

1/ Structure de train pour suspensions à roues indépendantes, notamment du type Mac PHERSON et pour l'avant d'un véhicule automobile, caractérisé par le fait que les bras de roue (4) sont pourvus d'ouvertures (13) permettant le passage des extrémités de la barre de torsion (11) située en dessous du plan des bras (4), lesdites extrémités étant raccordées à la partie supérieure d'une biellette (16) verticale, dirigée vers le haut et pourvue de rotules à ses deux bouts, dont la partie inférieure est solidarisée à la face supérieure des bras (4).

2/ Structure de train pour suspensions à roues indépendantes, notamment du type Mac PHERSON et pour l'avant d'un véhicule automobile, caractérisé par le fait que les bras de roues (4) sont pourvus d'ouvertures (13) permettant le passage des extrémités de la barre de torsion (11) située en dessous du plan des bras (4), lesdites extrémités étant raccordées à la partie inférieure d'une biellette (16') verticale, dirigée vers le haut et dont la partie supérieure est solidarisée à la partie inférieure de la jambe de force (8).

3/ Structure de train selon les revendications 1 ou 2, caractérisé en ce que la barre (11) est solidarisée par des attaches élastiques (12) à la face inférieure d'un berceau (7) sur lequel est préassemblé le groupe motopropulseur, l'ensemble ci-dessus étant globalement rapporté sur la caisse du véhicule.

0270406

FIG.1

0270406

FIG.2

FIG.3

## DOCUMENTS CONSIDERES COMME PERTINENTS

| Catégorie | Citation du document avec indication, en cas de besoin, des parties pertinentes | Revendication concernée | CLASSEMENT DE LA DEMANDE (Int. Cl.4) |
|---|---|---|---|
| Y | FR-A-1 373 934 (PORSCHE) <br> * Figures 1,2; revendications 1,2; page 1, colonne de droite, ligne 16 - page 2, colonne de gauche, ligne 7 * <br> --- | 1,2 | B 60 G 21/04 |
| Y | EP-A-0 090 346 (NISSAN) <br> * Figure 2; page 3, lignes 26-33 * | 1 | |
| A | | 3 | |
| | --- | | |
| Y | DE-A-2 932 699 (DAIMLER-BENZ) <br> * Figures 1,2; page 11, lignes 1-8 * <br> --- | 2 | |
| A | DE-U-6 609 204 (DAIMLER-BENZ) <br> * Figure 1 * <br> --- | 1,2 | |
| A | AUTOMOTIVE ENGINEERING, vol. 89, no. 10, octobre 1981, page 48, Dallas, Texas, US: "Chrysler" <br> * En entier * <br> ----- | 3 | |
| | | | **DOMAINES TECHNIQUES RECHERCHES (Int. Cl.4)** |
| | | | B 60 G |

Le présent rapport a été établi pour toutes les revendications

| Lieu de la recherche | Date d'achèvement de la recherche | Examinateur |
|---|---|---|
| LA HAYE | 09-02-1988 | TORSIUS A. |